# EUROPÄISCHE PATENTSCHRIFT

(11) **EP 3 751 152 B1**
(45) Veröffentlichungstag und Bekanntmachung des Hinweises auf die Patenterteilung: **21.12.2022**
(21) Anmeldenummer: 19020383.6
(22) Anmeldetag: 13.06.2019
(51) Int. Cl.: F04F 5/36, B65G 53/06

(54) **VERFAHREN, VORRICHTUNG UND ANLAGE ZUM FÖRDERN VON FEINTEILIGEN, PULVERFÖRMIGEN FESTSTOFFEN**
METHOD, DEVICE AND SYSTEM FOR CONVEYING FINE SOLID POWDER MATERIAL
PROCÉDÉ, DISPOSITIF ET INSTALLATION DE TRANSPORT DES SOLIDES PULVÉRULENTS EN FINES PARTICULES

(43) Veröffentlichungstag der Anmeldung: 16.12.2020
(73) Patentinhaber: Linde GmbH, 82049 Pullach (DE)
(72) Erfinder: Schmand, Ralf, 85716 Unterschleißheim (DE); Resch, Markus, 2603 Felixdorf (AT); Wagner, Rene, 4690 Rutzenham (AT); Aigner, Hubert, 8642 Sankt Lorenzen im Mürztal (AT)
(74) Vertreter: Lu, Jing

(56) Entgegenhaltungen:
- CN-A- 109 353 825
- JP-A- S5 556 922
- US-A- 3 479 093
- US-A- 4 265 572

## Beschreibung

Die Erfindung betrifft ein Verfahren zum Fördern von feinteiligen, pulverförmigen Feststoffen, insbesondere Zement, aus einem ersten Behältnis durch eine Förderleitung in ein zweites Behältnis sowie eine Vorrichtung und eine Anlage hierfür.

### Stand der Technik

Bei der Betonherstellung wird hierzu nötiger Zement oftmals aus einem Zementsilo oder einem anderen, typischerweise großen, Behältnis, in dem er gelagert bzw. gespeichert ist, entnommen. In das Zementsilo wird der Zement dabei zuvor meist mit Zement befüllt, der in einem Tankwagen bzw. Zementtankwagen oder dergleichen angeliefert wird. Aus einem Tank bzw. Behältnis des Tankwagens wird der Zement dann typischerweise mittels Druckluft als Fördermedium über eine Förderleitung (oder eine Steigleitung) in das Zementsilo gefördert.

Die hierfür nötige Druckluft wird dabei typischerweise mittels am Tankwagen vorhandener Kompressoren erzeugt. Aufgrund der durch den Betrieb der Kompressoren entstehenden Wärme wird die Druckluft aufgeheizt, meist auf über 90°C. Der Zement hat typischerweise eine Temperatur von ca. 40°C, sodass der Zement während der Förderung durch die Förderleitung von der Druckluft erwärmt wird, oftmals auf bis zu 70°C.

Eine solche Erwärmung des Zements ist jedoch unerwünscht, da zum Anmischen des Betons in der Regel eine gewisse Temperatur gefordert oder gewünscht ist bzw. eine bestimmte Temperatur nicht überschritten werden sollte. Eine erhöhte Temperatur des Zements ist hierbei also nachteilig. Um die Temperatur des Zements zu reduzieren, kann flüssiger Stickstoff während der Förderung des Zements in die Förderleitung zugegeben werden.

Auf diese Weise kann der Zement zwar gekühlt werden, allerdings muss aufgrund des zusätzlichen Stickstoffs in der Förderleitung der Druck der Druckluft reduziert werden, um keine unerlaubt hohen Drücke zu erreichen. Dies führt jedoch zu einer langsameren Förderung und damit einer längeren Förderdauer. Ein weiteres Problem ist das Auskondensieren von Luftfeuchtigkeit aus der Druckluft während des Kühlvorgangs, was zu einer reduzierten Qualität des Zements führt. Zudem werden aufgrund der Verdampfung des flüssigen Stickstoffs in der Förderleitung oder ggf. danach im Zementsilo zusätzliche bzw. vergrößerte Filter benötigt, da zusätzliche Abluft entsteht. Ergänzend kommt hinzu, dass durch den flüssigen Stickstoff Schäden an beteiligten Komponenten wie der Förderleitung oder im bzw. am Zementsilo auftreten können.

Aus der DE 10 32 073 A1 ist es bekannt, in eine mit Druckluft bzw. Förderluft betriebene Förderleitung für feinteilige, pulverförmige Feststoffe wie Zement flüssigen Stickstoff oder aber auch kalten, gasförmigen Stickstoff zur Kühlung einzudüsen. Ebenso ist es daraus bekannt, die Druckluft bzw. Förderluft schon vor dem Einleiten in die feinteiligen, pulverförmigen Feststoffe abzukühlen.

Die Patentschrift US4265572A offenbart ein Verfahren, in dem ein Einspeisegas und ein Ausspeisegas wie Stickstoff in einem Behälter mit pulverförmige Feststoff eingerichtet sind. Das Ausspeisegas transportiert die pulverförmige Feststoffe, indem das Gas aus dem Behälter abgesaugt wird.

Die Patentschrift US3479093A offenbart ein Verfahren zum Fördern von fester feiner Partikel zu einem Schmelzbad mittels Hochdruck Stickstoff.

Die Patentschrift JPS5556922A offenbart ein Verfahren zum Fördern von pulverförmigen Feststoffen, indem die Pulver durch ein Gas zum Schweben gebracht wird und dann aus dem Behälter weiter gefördert wird.

Die Patentschrift CN109353825 offenbart eine Pneumatische Vorwärmvorrichtung zum Fördern von pulverförmigen Materialien. Die pulverförmigen Materialien werden durch das erwärmte Fördergas indirekt geheizt.

Die vorliegende Erfindung stellt sich vor diesem Hintergrund die Aufgabe, die Förderung von Zement oder ähnlichen feinteiligen, pulverförmigen Feststoffen über eine Förderleitung zu verbessern.

### Offenbarung der Erfindung

Diese Aufgabe wird durch ein Verfahren zum Fördern von feinteiligen, pulverförmigen Feststoffen sowie eine Vorrichtung und eine Anlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die vorliegende Erfindung betrifft ein Verfahren zum Fördern von feinteiligen, pulverförmigen Feststoffen, insbesondere Zement, aus einem ersten Behältnis durch eine Förderleitung in ein zweites Behältnis, bei dem die feinteiligen, pulverförmigen Feststoffe mittels eines Fördermediums durch die Förderleitung gefördert werden. Das Fördermedium kann dabei über einen geeigneten Anschluss in das erste Behältnis und/oder die Förderleitung eingebracht werden. Als Fördermedium wird dabei nur Stickstoff verwendet. Besonders bevorzugt ist es dabei, wenn aus flüssigem Stickstoff mittels eines Verdampfers gasförmiger Stickstoff erzeugt und der gasförmige Stickstoff als Fördermedium verwendet wird.

Unter der Verwendung von nur Stickstoff als Fördermedium ist dabei insbesondere zu verstehen, dass reiner Stickstoff, nicht aber irgendwelche anderen Gase oder Gasgemische als Fördermedium verwendet werden oder darin vorhanden sind, insbesondere also auch keine Luft (die neben Stickstoff noch andere Anteile aufweist). Es versteht sich, dass gewisse, in der Praxis unvermeidbare Unreinheiten des Stickstoffs durchaus möglich sind, jedoch keine aktiv bzw. gewollt herbeigeführte Verwendung anderer Gase oder Gasgemische für das Fördermedium vorgesehen ist. Insofern kann das Fördermedium beispielsweise zu wenigstens 95%, bevorzugt zu wenigstens 99%, weiter bevorzugt zu wenigstens 99,5%, Stickstoff aufweisen bzw. aus Stickstoff bestehen.

Der besondere Vorteil des vorgeschlagenen Verfahrens liegt nun darin, dass Stickstoff, insbesondere gasförmiger Stickstoff, besonders einfach und schnell mittels eines Verdampfers aus flüssigem bzw. verflüssigtem Stickstoff, der beispielsweise in einem Speichertank vorgehalten werden kann, erzeugt bzw. gewonnen werden kann. Auf diese Weise wird insbesondere kein Kompressor mehr benötigt, wie er für übliche Förderluft bzw. Druckluft als Fördermedium nötig ist, da bereits durch das Verdampfen des flüssigen Stickstoffs ein ausreichend hoher Druck des Fördermediums zum Fördern der feinteiligen, pulverförmigen Feststoffe erzeugt wird.

Damit wird nicht nur ein durch einen solchen Kompressor hervorgerufenes, lautes und störendes Geräusch vermieden. Zudem ist dann nämlich auch keine (aktive bzw. zusätzliche) Kühlung des Fördermediums mehr nötig, wie es bei Förderluft der Fall ist. Wie erwähnt, wird Förderluft nämlich durch einen Kompressor sehr stark aufgeheizt, der Stickstoff hingegen kann direkt mit der gewünschten Temperatur bereitgestellt werden, insbesondere eben durch den Verdampfer.

Es Kennzeichen der Erfindung, dass gasförmiger Stickstoff mit flüssigem Stickstoff vermengt und als Fördermedium verwendet wird. Damit kann eine Temperatur des Fördermediums gesenkt werden, wenn dies gewünscht ist. Nichtsdestotrotz kann der gesamte verwendete Stickstoff aus flüssigem Stickstoff gewonnen werden, insbesondere aus einem Speichertank. Ein Teil kann dabei mittels des Verdampfers in gasförmigen Stickstoff überführt werden, ein anderer Teil kann direkt - ohne Verdampfen - in den gasförmigen Stickstoff eingemengt werden. Dabei kann der gasförmige Stickstoff mit dem flüssigen Stickstoff vor Einbringung in die Förderleitung vermengt werden. Dann kann direkt eine bestimmte Temperatur des Fördermediums erreicht werden. Denkbar ist aber auch, dass der flüssige Stickstoff nach dem gasförmigen Stickstoff in die Förderleitung eingebracht wird, beispielsweise über einen separaten Anschluss, ggf. auch erst im Verlauf der Förderung in die Förderleitung, ggf. auch an verschiedenen Stellen.

Vorteilhafterweise wird eine Temperatur des Fördermediums auf einen Wert innerhalb des vorgegebenen Temperaturbereichs eingestellt und/oder eingeregelt, zweckmäßigerweise mittels einer entsprechend eingerichteten Steuer- und/oder Regeleinrichtung. Hierzu kann beispielsweise der erwähnte Verdampfer derart betrieben werden, dass der gasförmige Stickstoff den Verdampfer bzw. eine daran anschließende Leitung mit einer gewünschten Temperatur verlässt. Ebenso ist es möglich, die Anteile von gasförmigem und flüssigem Stickstoff, die vermengt werden, gezielt so einzustellen, dass eine gewünschte Temperatur des Fördermediums erreicht wird.

Zweckmäßig ist es dabei, wenn ein Temperaturbereich zwischen -50° und +30°, bevorzugt zwischen -50°C und 0°C, verwendet wird, oder wobei ein Temperaturbereich von 50°C weniger als Umgebungstemperatur bis 20°C mehr als Umgebungstemperatur verwendet wird. Damit ist es nicht nur möglich, eine Aufheizung der feinteiligen, pulverförmigen Feststoffe zu vermeiden, sondern sogar eine gezielte Abkühlung herbeizuführen.

Wie schon erwähnt, kommen als feinteilige, pulverförmige Feststoffe besonders bevorzugt Zement in Betracht, da hier eine Erwärmung aufgrund des später anzumischenden Betons unerwünscht ist. Insofern kommt als erstes Behältnis insbesondere ein Zementtankwagen und/oder als zweites Behältnis ein Zementsilo in Betracht. Generell lässt sich das Verfahren aber auch für andere feinteilige, pulverförmige Feststoffe wie beispielsweise Mehl anwenden.

Insgesamt ermöglicht das vorgeschlagene Verfahren also insbesondere das Vermeiden einer Aufheizung der feinteiligen, pulverförmigen Feststoffe, insbesondere des Zements, innerhalb eines Förderstromes, was es insbesondere bei Zement aus den eingangs erwähnten Gründen zu verhindern oder zu umgehen gilt.

Bei der Verwendung von nur Stickstoff, insbesondere gasförmigem Stickstoff, anstelle von Förderluft wird eine Aufheizung der feinteiligen, pulverförmigen Feststoffe vermieden. Der gasförmige Stickstoff kann mit beispielsweise Umgebungstemperatur mittels des Verdampfers erzeugt werden. Nichtsdestotrotz ist einer etwaiger, zusätzlicher Kühleffekt nicht unerwünscht oder kann sogar gewollt sein.

Das Verhindern von entstehender Wärme, wie sie insbesondere bei herkömmlicher Förderluft, die mittels eines Kompressors auf einen bestimmten Druck gebracht werden muss, entsteht, senkt die benötigte Gesamtenergiebilanz zur Temperaturführung für das Endprodukt gegenüber dem bisherigen Stand. Zudem wird eine deutliche Verminderung von Lärm-Emissionen durch die nicht mehr nötige Erzeugung der Förderluft durch den Kompressor beispielsweise am Tankwagen bzw. Tankfahrzeug erreicht.

Gegenstand der Erfindung ist weiterhin eine Vorrichtung zur Bereitstellung von Stickstoff als Fördermedium zum Fördern von feinteiligen, pulverförmigen Feststoffen, insbesondere Zement. Die Vorrichtung weist dabei wenigstens einen Anschluss zur Kopplung mit einem Anschluss eines ersten Behältnisses und/oder eines Anschlusses einer Förderleitung auf. Zudem ist die Vorrichtung dazu eingerichtet, über den wenigstens einen Anschluss Stickstoff als alleiniges Fördermedium in das erste Behältnis und/oder die Förderleitung einzubringen, um die feinteiligen, pulverförmigen Feststoffen aus dem ersten Behältnis durch die Förderleitung in ein zweites Behältnis zu fördern.

Besonders bevorzugt ist es, wenn die Vorrichtung zudem einen Speichertank für flüssigen Stickstoff und einen Verdampfer zum Erzeugen gasförmigen Stickstoffs aus dem flüssigen Stickstoff aufweist. Damit kann gasförmiger Stickstoff als Fördermedium bereitgestellt werden, ggf. auch unter Beimengung von flüssigem Stickstoff. Hierfür ist es zweckmäßig, wenn die Vorrichtung weiterhin eine Mischeinrichtung aufweist, die dazu eingerichtet ist, flüssigen Stickstoff mit gasförmigem Stickstoff zu vermengen.

Vorteilhafterweise weist die Vorrichtung zudem eine Steuer- und/oder Regeleinrichtung auf, die dazu eingerichtet ist, die Temperatur des Fördermediums auf einen Wert innerhalb eines vorgegebenen Temperaturbereichs einzustellen und/oder einzuregeln. Hierzu kann zweckmäßigerweise auch eine Temperaturmessvorrichtung bzw. ein Temperatursensor vorgesehen sein. Die Steuer- und/oder Regeleinrichtung und die Mischeinrichtung können dabei auch als eine Einrichtung, die beide Funktionen erfüllt, ausgebildet sein, wie später noch näher erläutert wird.

Gegenstand der Erfindung ist weiterhin eine Anlage mit einer erfindungsgemäßen Vorrichtung, einem zweiten Behältnis, und einer Förderleitung, die dazu eingerichtet ist, mit einem ersten Behältnis verbunden zu werden und die mit dem zweiten Behältnis verbunden ist, wobei der wenigstens eine Anschluss der Vorrichtung mit einem Anschluss des ersten Behältnisses koppelbar ist und/oder einem Anschluss der Förderleitung gekoppelt ist. Zudem kann ein erstes Behältnis Teil der Anlage sein, das dann mit der Förderleitung verbunden ist. Bei dem ersten Behältnis kann es sich insbesondere um einen Zementtankwagen und/oder bei dem zweiten Behältnis um ein Zementsilo handeln.

Insbesondere ist die Vorrichtung bzw. die Anlage dazu eingerichtet ein erfindungsgemäßes Verfahren durchzuführen. Hinsichtlich weiterer bevorzugter Ausgestaltungen und Vorteile der Vorrichtung und der Anlage sei zur Vermeidung von Wiederholungen auf vorstehende Ausführungen zum Verfahren verwiesen, die hier entsprechend gelten.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnung
- Figur 1: zeigt schematisch eine erfindungsgemäße Anlage in einer bevorzugten Ausführungsform, mit der ein erfindungsgemäßes Verfahren durchführbar ist.
- Figur 2: zeigt schematisch eine erfindungsgemäße Anlage in einer weiteren bevorzugten Ausführungsform, mit der ein erfindungsgemäßes Verfahren durchführbar ist.

### Ausführliche Beschreibung der Zeichnung

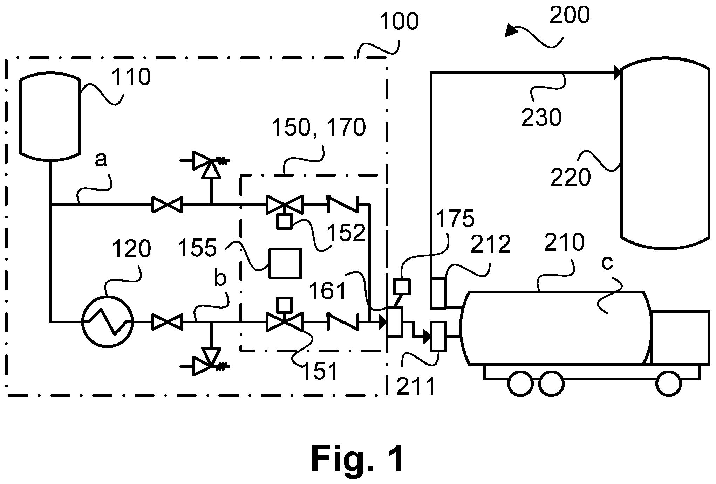

In Figur 1 ist schematisch eine erfindungsgemäße Anlage 200 in einer bevorzugten Ausführungsform dargestellt, mit der ein erfindungsgemäßes Verfahren durchführbar ist. Die Anlage 200 weist ein als Zementtankwagen ausgebildetes erstes Behältnis 210, ein als Zementsilo ausgebildetes zweites Behältnis 220 sowie eine Förderleitung 230 auf.

Die Förderleitung 230 verbindet dabei den Zementtankwagen 210 bzw. dort insbesondere einen Tank, in dem sich als Zement ausgebildete, feinteilige, pulverförmige Feststoffe c, befinden, mit dem Zementsilo 220. Durch die Förderleitung 230 kann dann der Zement c aus dem Zementtankwagen 210 in das Zementsilo 220 gefördert werden.

An dem Zementtankwagen 210 sind beispielhaft zwei Anschlüsse bzw. Flansche 211 und 212 vorgesehen. Während der Anschluss 211 dafür vorgesehen ist, darüber ein Fördermedium einzubringen, kann über den Anschluss 212 die Förderleitung 230 angeschlossen werden.

Weiterhin weist die Anlage 200 eine Vorrichtung 100 zur Bereitstellung von Stickstoff als Fördermedium auf. Beispielhaft weist die Vorrichtung 100 wiederum einen Speichertank für flüssigen bzw. verflüssigten Stickstoff a auf, einen Verdampfer 120, eine Steuer- und Regeleinrichtung 150 sowie einen Anschluss bzw. Flansch 161, an dem letztlich Stickstoff als Fördermedium bereitgestellt werden kann.

Mittels des Verdampfers 120 kann aus flüssigem Stickstoff a gasförmiger Stickstoff b gewonnen bzw. erzeugt werden, der dann an dem Anschluss 161 bereitgestellt wird. Zudem kann flüssiger Stickstoff a direkt aus dem Speichertank 110 vor dem Anschluss 161 mit dem gasförmigen Stickstoff b vermengt werden.

In der Leitung für den gasförmigen Stickstoff b ist dabei innerhalb der Steuer- und Regeleinrichtung 150 ein insbesondere elektrisch betätigbares Ventil 151 vorgesehen, um den Fluss gasförmigen Stickstoffs b zu steuern bzw. zu regeln. Ebenso ist in der Leitung für den flüssigen Stickstoff a innerhalb der Steuer- und Regeleinrichtung 150 ein insbesondere elektrisch betätigbares Ventil 152 vorgesehen, um den Fluss flüssigen Stickstoffs a zu steuern bzw. zu regeln. Zudem ist eine Recheneinheit 155 vorgesehen, mittels welcher die beiden Ventile 151 und 152 geeignet angesteuert werden können.

Auf diese Weise dient die Steuer- und Regeleinrichtung 150 zugleich als Mischeinrichtung 170, um flüssigen Stickstoff a mit gasförmigem Stickstoff b zu vermengen. Mittels eines Temperatursensors 175 kann dabei eine Temperatur von an dem Anschluss 161 bereitgestelltem Stickstoff ermittelt bzw. gemessen werden. Basierend darauf kann die Recheneinheit 155 dann entsprechend die Ströme des gasförmigen Stickstoffs b und des flüssigen Stickstoffs a über die Ventile 151, 152 einstellen, sodass der - vermengte - Stickstoff eine gewünschte Temperatur erreicht.

Der Anschluss 161 wird mit dem Anschluss 211 des Zementtankwagens 210 gekoppelt, sodass der von der Vorrichtung 100 bereitgestellte Stickstoff mit der gewünschten Temperatur in den Zementtankwagen 210 eingebracht werden kann, um den Zement c durch die Förderleitung 230 in das Zementsilo 220 zu fördern. Wie schon erwähnt, wird der hierfür nötige Druck durch den Verdampfer 120 bzw. durch das Verdampfen des flüssigen Stickstoffs erzeugt. Es versteht sich jedoch, dass der durch das Verdampfen erzeugte Druck ggf. auch reduziert werden kann.

An dieser Stelle sei auch angemerkt, dass nicht notwendigerweise flüssiger Stickstoff mit dem gasförmigen Stickstoff vermengt werden muss, insbesondere dann nicht, wenn die Temperatur des gasförmigen Stickstoffs b nach dem Verdampfer 120 bereits eine gewünschte Temperatur aufweist oder wenn der Verdampfer entsprechend betrieben wird, dass der gasförmige Stickstoff die gewünschte Temperatur erreicht. Der gezeigte Anlagenteil, in dem der flüssige Stickstoff zum Anschluss geführt wird, ist dann nicht nötig bzw. muss nicht verwendet werden.

Ergänzend sei angemerkt, dass auch weitere, ggf. benötigte Ventile wie Sicherheits-, Überdruck- und Rückschlagventile vorgesehen sein können, wie auch teils ohne nähere Bezeichnung gezeigt, die für die Idee der vorliegenden Erfindung jedoch nicht primär relevant sind.

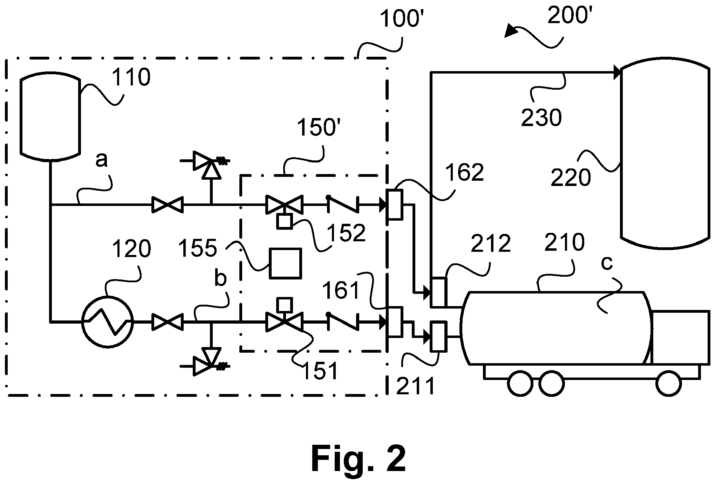

In Figur 2 ist schematisch eine erfindungsgemäße Anlage 200' in einer weiteren bevorzugten Ausführungsform dargestellt, mit der ebenfalls ein erfindungsgemäßes Verfahren durchführbar ist.

Die Anlage 200 entspricht in weiten Teilen der Anlage 200, sodass nachfolgend nur abweichende Aspekte näher beschrieben werden sollen, im Übrigen sei auf die Beschreibung zu Figur 1 bzw. Anlage 200 verwiesen. Gleiches gilt für die Vorrichtung 100' als Teil der Anlage 200' im Verhältnis zur Vorrichtung 100 gemäß Figur 1.

Bei der Steuer- und Regeleinrichtung 150' der Vorrichtung 100' wird - im Gegensatz zur Steuer- und Regeleinrichtung 150 bzw. der Mischeinrichtung 170 bei der Vorrichtung 100 gemäß Figur 1 - der flüssige Stickstoff a nicht mit dem gasförmigen Stickstoff b vermengt. Stattdessen wird der flüssige Stickstoff a in einem separaten Anschluss 162 bereitgestellt, während an dem Anschluss 161 nur der gasförmige Stickstoff b bereitgestellt wird.

Der Anschluss 161 wird auch hier mit dem Anschluss 211 des Zementtankwagens 210 gekoppelt, sodass der von der Vorrichtung 100 bereitgestellte Stickstoff in den Zementtankwagen 210 eingebracht werden kann, um den Zement c durch die Förderleitung 230 in das Zementsilo 220 zu fördern Der Anschluss 162 wird dann mit dem Anschluss 212 des Zementtankwagens 210 verbunden, sodass der flüssige Stickstoff je nach Bedarf in die Förderleitung 230 eingebracht bzw. eingedüst werden kann, um ggf. die Temperatur anzupassen.

Es versteht sich, dass der Anschluss bzw. Flansch 212 hierzu entsprechende Anschlussmöglichkeiten bieten muss. Ebenso sei darauf hingewiesen, dass nicht notwendigerweise die in Figur 2 oder auch in Figur 1 gezeigte bzw. hierzu beschriebene Art der Anschlüsse bzw. Verbindungen, insbesondere hinsichtlich der Verbindung des Zementtankwagens über die Förderleitung mit dem Zementsilo vorliegen muss. Beispielsweise kann in der Förderleitung 230, auch kurz nach dem Anschluss 212, ein separater Anschluss vorgesehen sein, an den der Anschuss 162 gekoppelt werden kann.

Auch mittels der Steuer- und Regeleinrichtung 150' können die Ventile 151 und 152 jedoch derart angesteuert werden, dass letztlich das Fördermedium, das zum Fördern des Zements c verwendet wird, eine gewünschte Temperatur erreicht bzw. aufweist.

## Patentansprüche

1. Verfahren zum Fördern von feinteiligen, pulverförmigen Feststoffen (c), insbesondere Zement, aus einem ersten Behältnis (210) durch eine Förderleitung (230) in ein zweites Behältnis (220), bei dem die feinteiligen, pulverförmigen Feststoffe (c) mittels eines Fördermediums (a, b) durch die Förderleitung (230) gefördert werden, wobei nur Stickstoff als Fördermedium (a, b) verwendet wird, **dadurch gekennzeichnet, dass** gasförmiger Stickstoff (b) mit flüssigem Stickstoff (a) vermengt und als Fördermedium verwendet wird.

2. Verfahren nach Anspruch 1, wobei aus flüssigem Stickstoff (100) mittels eines Verdampfers (120) gasförmiger Stickstoff (b) erzeugt und der gasförmige Stickstoff als Fördermedium verwendet wird.

3. Verfahren nach einem der vorstehenden Ansprüche, wobei der gasförmige Stickstoff (b) mit dem flüssigen Stickstoff (b) vor Einbringung in die Förderleitung vermengt wird, oder wobei der flüssige Stickstoff (a) nach dem gasförmigen Stickstoff (b) in die Förderleitung (230) eingebracht wird.

4. Verfahren nach einem der vorstehenden Ansprüche, wobei eine Temperatur des Fördermediums (a, b) auf einen Wert innerhalb des vorgegebenen Temperaturbereichs eingestellt und/oder eingeregelt wird.

5. Verfahren nach Anspruch 4, wobei ein Temperaturbereich zwischen -50° und +30°, bevorzugt zwischen -50°C und 0°C, verwendet wird, oder wobei ein Temperaturbereich von 50°C weniger als Umgebungstemperatur bis 20°C mehr als Umgebungstemperatur verwendet wird.

6. Vorrichtung (100, 100') zur Bereitstellung von Stickstoff als Fördermedium (a, b) zum Fördern von feinteiligen, pulverförmigen Feststoffen (c), insbesondere Zement,
mit wenigstens einem Anschluss (161, 162) zur Kopplung mit einem Anschluss (211, 212) eines ersten Behältnisses (210) und/oder einem Anschluss einer Förderleitung (230),
wobei die Vorrichtung (100, 100') dazu eingerichtet ist, über den wenigstens einen Anschluss (162, 161) Stickstoff als alleiniges Fördermedium in das erste Behältnis (210) und/oder die Förderleitung (230) einzubringen, um die feinteiligen, pulverförmigen Feststoffe (c) aus dem ersten Behältnis (210) durch die Förderleitung (230) in ein zweites Behältnis (220) zu fördern, wobei weiterhin mit einem Speichertank (110) für flüssigen Stickstoff (a) und mit einem Verdampfer (120) zum Erzeugen gasförmigen Stickstoffs (b) aus dem flüssigen Stickstoff (a), **dadurch gekennzeichnet, dass** weiterhin mit einer Mischeinrichtung (170), die dazu eingerichtet ist, flüssigen Stickstoff mit gasförmigem Stickstoff zu vermengen.

7. Vorrichtung (100) nach Anspruch 6,weiterhin mit einer Steuer- und/oder Regeleinrichtung (150, 150'), die dazu eingerichtet ist, die Temperatur des Fördermediums (a, b) auf einen Wert innerhalb eines vorgegebenen Temperaturbereichs einzustellen und/oder einzuregeln.

8. Anlage (200, 200') mit einer Vorrichtung (100, 100') nach einem der Ansprüche 6 oder 7, einem zweiten Behältnis (220) und mit einer Förderleitung (230), die mit dem zweiten Behältnis (220) verbunden ist und die dazu eingerichtet ist, mit einem ersten Behältnis (210) verbunden zu werden, wobei der wenigstens eine Anschluss (161, 162) der Vorrichtung (100, 100') mit einem Anschluss (211, 212) des ersten Behältnisses (210) koppelbar ist und/oder einem Anschluss der Förderleitung (230) gekoppelt ist.

9. Anlage (200, 200') nach Anspruch 8, weiterhin mit einem mit einem ersten Behältnis (210), das mit der Förderleitung (230) verbunden ist.

## Claims

1. Method for conveying fine solid powder material (c), in particular cement, from a first container (210) through a conveying line (230) into a second container (220) in which the fine solid powder material (c) is conveyed by means of a conveying medium (a, b) through the conveying line (230), wherein only nitrogen is used as the conveying medium (a, b), **characterized in that** gaseous nitrogen (b) is mixed with liquid nitrogen (a) and used as a conveying medium.

2. Method according to Claim 1, wherein gaseous nitrogen (b) is produced from liquid nitrogen (100) by means of an evaporator (120) and the gaseous nitrogen is used as a conveying medium.

3. Method according to either of the preceding claims, wherein the gaseous nitrogen (b) is mixed with the liquid nitrogen (b) prior to introduction into the conveying line, or wherein the liquid nitrogen (a) is introduced into the conveying line (230) after the gaseous nitrogen (b).

4. Method according to any one of the preceding claims, wherein a temperature of the conveying medium (a, b) is set and/or adjusted to a value within the prespecified temperature range.

5. Method according to Claim 4, wherein a temperature range between - 50 °C and +30 °C, preferably between -50 °C and 0 °C, is used, or wherein a temperature range from 50 °C lower than ambient temperature up to 20 °C more than ambient temperature is used.

6. Device (100, 100') for providing nitrogen as a conveying medium (a, b) for conveying fine solid powder material (c), in particular cement,
comprising at least one connector (161, 162) for coupling to a connector (211, 212) of a first container (210) and/or to a connector of a conveying line (230),
wherein the device (100, 100') is configured to introduce nitrogen as the sole conveying medium into the first container (210) and/or into the conveying line (230) via the at least one connector (162, 161) in order to convey the fine solid powder material (c) from the first container (210) into a second container (220) through the conveying line (230), wherein further comprising a storage tank (110) for liquid nitrogen (a) and with an evaporator (120) for generating gaseous nitrogen (b) from the liquid nitrogen (a), **characterized by** further comprising a mixing device (170) configured to mix liquid nitrogen with gaseous nitrogen.

7. Device (100) according to Claim 6, further comprising a control and/or regulating device (150, 150') configured to set and/or adjust the temperature of the conveying medium (a, b) to a value within a prespecified temperature range.

8. System (200, 200') comprising a device (100, 100') according to either of Claims 6 or 7, a second container (220) and comprising a conveying line (230) connected to the second container (220) and configured to be connected to a first container (210), wherein the at least one connector (161, 162) of the device (100, 100') can be coupled to a connector (211, 212) of the first container (210) and/or is coupled to a connector of the conveying line (230).

9. System (200, 200') according to Claim 8, further comprising a comprising a first container (210) connected to the conveying line (230).

## Revendications

1. Procédé de transport de solides (c) pulvérulents en fines particules, en particulier du ciment, à partir d'un premier récipient (210) à travers un conduit de transport (230) dans un second récipient (220), dans lequel les solides (c) pulvérulents en fines particules sont transportés au moyen d'un fluide de transport (a, b) à travers le conduit de transport (230), dans lequel seul l'azote est utilisé comme fluide de transport (a, b), **caractérisé en ce que** l'azote gazeux (b) est mélangé avec de l'azote liquide (a) et utilisé comme fluide de transport.

2. Procédé selon la revendication 1, dans lequel de l'azote gazeux (b) est produit à partir de l'azote liquide (100) au moyen d'un évaporateur (120) et l'azote gazeux est utilisé comme fluide de transport.

3. Procédé selon l'une quelconque des revendications précédentes, dans lequel l'azote gazeux (b) est mélangé avec l'azote liquide (b) avant l'introduction dans le conduit de transport ou dans lequel l'azote liquide (a) est introduit après l'azote gazeux (b) dans le conduit de transport (230).

4. Procédé selon l'une quelconque des revendications précédentes, dans lequel une température du fluide de transport (a, b) est réglée et/ou régulée à une valeur au sein de la plage de température prédéfinie.

5. Procédé selon la revendication 4, dans lequel une plage de température entre -50 ° et +30 ° est utilisée, de préférence entre -50 °C et 0 °C ou dans lequel une plage de température de 50 °C de moins que la température ambiante à 20 °C de plus que la température ambiante est utilisée.

6. Dispositif (100, 100') pour la préparation d'azote sous forme de fluide de transport (a, b) pour le transport de solides (c) pulvérulents en fines particules, en particulier du ciment,
comprenant au moins un raccord (161, 162) pour l'accouplement à un raccord (211, 212) d'un premier récipient (210) et/ou à un raccord d'un conduit de transport (230),
dans lequel le dispositif (100, 100') est conçu pour introduire de l'azote par le biais de l'au moins un raccord (162, 161) sous forme de fluide de transport unique dans le premier récipient (210) et/ou le conduit de transport (230), afin de transporter les solides (c) pulvérulents en fines particules du premier récipient (210) à travers le conduit de transport (230) dans un second récipient (220), dans lequel en outre comprenant un réservoir de stockage (110) pour l'azote liquide (a) et comprenant un évaporateur (120) pour la production d'azote gazeux (b) à partir de l'azote liquide (a), **caractérisé en ce que** en outre comprenant un dispositif de mélange (170), qui est conçu pour mélanger l'azote liquide avec l'azote gazeux.

7. Dispositif (100) selon la revendication 6, comprenant en outre un dispositif de commande et/ou de régulation (150, 150'), qui est conçu pour régler et/ou réguler la température du fluide de transport (a, b) sur une valeur au sein d'une plage de température prédéfinie.

8. Installation (200, 200') comprenant un dispositif (100, 100') selon l'une quelconque des revendications 6 ou 7, un second récipient (220) et comprenant un conduit de transport (230), qui est relié au second récipient (220) et est conçu pour être relié à un premier récipient (210), dans lequel l'au moins un raccord (161, 162) du dispositif (100, 100') peut être accouplé à un raccord (211, 212) du premier récipient (210) et/ou est accouplé à un raccord du conduit de transport (230).

9. Installation (200, 200') selon la revendication 8, comprenant en outre comprenant un premier récipient (210), qui est relié au conduit de transport (230).
